# EUROPÄISCHE PATENTSCHRIFT

(11) **EP 1 141 562 B1**
(45) Veröffentlichungstag und Bekanntmachung des Hinweises auf die Patenterteilung: **07.05.2003**
(21) Anmeldenummer: 99965454.4
(22) Anmeldetag: 13.12.1999
(51) Int. Cl.: F16B 37/04, F16B 7/18

(54) **VERBINDUNGSEINRICHTUNG ZUM ANSCHLUSS EINES ERSTEN WERKSTÜCKES AN EIN ZWEITES WERKSTÜCK**
COUPLING DEVICE FOR CONNECTING A FIRST WORKPIECE TO A SECOND ONE
DISPOSITIF D'ASSEMBLAGE PERMETTANT DE REUNIR UNE PREMIERE PIECE A UNE SECONDE

(30) Priorität: 15.12.1998 DE 29822303 U; 15.05.1999 DE 29908630 U; 15.06.1999 DE 29910404 U
(43) Veröffentlichungstag der Anmeldung: 10.10.2001
(73) Patentinhaber: Holscher, Winfried K.W., 78224 Singen (DE)
(72) Erfinder: Holscher, Winfried K.W., 78224 Singen (DE)
(74) Vertreter: Hiebsch, Gerhard F., Dipl.-Ing.
(86) Internationale Anmeldenummer: EP9909867
(87) Internationale Veröffentlichungsnummer: WO00036311

(56) Entgegenhaltungen:
- EP-A- 0 136 431
- DE-A- 3 829 306
- GB-A- 1 256 226

## Beschreibung

Die Erfindung betrifft eine Verbindungseinrichtung zum Anschluss eines -- wenigstens mit einer hinterschnittenen Längsnut ausgestatteten -- ersten Werkstückes an ein zweites seinerseits mit Längsnut/en versehenes Werkstück, wobei die Verbindungseinrichtung zumindest eine die Breite des engen Nutenquerschnitts der Längsnut/en übersteigende Erstreckung aufweist; insbesondere soll die Verbindungseinheit bei Profilstäben polygonen Querschnitts bevorzugt bei stranggepressten Profilen rechteckigen Querschnitts -- mit in den Profilseitenwänden verlaufenden Seitenschnitte neu längsunten Verwendung finden.

Die Schrift zu DE-U 92 12 696 des Anmelders offenbart ein mutterartiges Element als Verbindungseinrichtung, welches vor allem bei aus Leichtmetall stranggepressten Hohlprofilen zur Anwendung gelangt, deren Innenraum von außen her nicht zugänglich ist. Jenes vorbekannte Element ist etwa quaderförmig ausgebildet und weist wenigstens zwei einander gegenüberliegende, in einem Winkel geneigte Flankenwände auf sowie ein Federorgan, das einerseits an einer der geneigten Flankenwände festliegt und anderseits die engere Oberfläche des Elements mit seinem freien Ende übergreift; dieses ist in entspanntem Zustand der Feder in Abstand zum Element angeordnet. Wird das Federorgan an das Mutterelement angedrückt, kann dieses -- mit seiner Schmalseite zuerst -- ohne weiteres in die hinterschnittene Nut eingeschoben werden.

Durch die DE-U-297 17 089 des Anmelders ist zudem für Hohlprofile mit sich zur Profilstirn hin öffnenden Längsnuten eine Verbindungseinrichtung in Form eines bügelförmigen Spannverbinders bekannt geworden, der beidends von einer Basisplatte etwa rechtwinkelig abragende Bügelschenkel aufweist; am Übergang der Basisplatte begrenzen beidseitige Seitenschlitze einen mittigen Schenkelhals. Ein ebenfalls dort beschriebener winkelförmiger Spannverbinder ist einends einer Basisplatte mit einem etwa rechtwinkelig abragenden Bügelschenkel ausgestattet; auch hier begrenzen am Übergang der Basisplatte beidseitige Seitenschlitze einen mittigen Schenkelhals.

In Kenntnis dieser Systeme hat sich der Erfinder das Ziel gesetzt, eine weitere Befestigungsmöglichkeit für Paare insbesondere stranggepresster Hohlprofile mehreckigen -insbesondere rechteckigen -- Querschnitts zu schaffen. Diese Verbindungseinrichtung soll schnell und in einfacher Weise anzubringen sowie weitestgehend verdrehsicher sein.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß weist die Verbindungseinrichtung wenigstens einen teilweise in den engen Nutenquerschnitt der Längsnut einsetzbaren Grundkörper mit beidseits einer Kammleiste od. dgl. Mittenstück verlaufenden -- sich in Verbindungslage an die Innenseite von Nutformrippen anlegenden -- längsseitlichen Schulterflächen auf, der im Bereich der Kammleiste von wenigstens einem an das Werkstück bzw. den Profilstab anschließbar ausgebildeten stiftartigen Anschlussorgan durchsetzt ist; die Verbindungseinrichtung ist zudem außerhalb des Grundkörpers mit einem Anschlusselement für das andere Werkstück versehen.

In einer bevorzugten Ausgestaltung der Verbindungseinrichtung ist der Grundkörper an wenigstens einem der Enden seiner Kammleiste mit einer die längsseitlichen Schulterflächen quer verbindenden Schulterfläche ausgestattet als Aufsitzfläche für einen auf ihr festlegbaren Spannklotz. Dessen und der Kammleiste Breite soll der Weite des Nutenschlitzes der Längsnut -- also der des nicht hinterschnittenen Nutenbereiches -- entsprechen, damit in diese jene Teile der Verbindungseinrichtung eingeführt werden können.

Soll an das eine Werkstück oder Profil ein zweites Werkstück mit -- bevorzugt zentrischem -- bohrungsartigem Kanal rechtwinkelig angeschlossen werden, wird das von der Kammleiste des Grundkörpers aufragende stiftartige Anschlussorgan in jenen Kanal eingeführt und darin festgelegt.

Als günstig hat es sich dazu erwiesen, das Anschlussorgan als Schraubstift mit zwei Gewindebereichen zu gestalten, die bevorzugt mit gegenläufigen Gewinden versehen und/oder von unterschiedlichen Durchmessern sein sollen. Letztere Maßnahme erleichtert vor allem die Orientierung bei der Montage; der Gewindebereich geringeren Durchmessers wird dem Grundkörper zugeordnet, der die entsprechende Gewindebohrung anbietet. Gleichem Zweck kann die Maßgabe dienen, die längsseitigen Schulterflächen gegenüber der/den Querschulterfläche/n um ein Maß höhenversetzt verlaufen zu lassen.

Erfindungsgemäß ist zumindest der außerhalb des Grundkörpers abragende Gewindebereich mit einem selbstformenden Gewinde versehen, um im Falle eines glatten -- also gewindelosen -- Kanals des Gegenwerkstückes in dieses fest eingebracht werden zu können.

Um eine Bewegung des Spannklotzes in Längsrichtung der Verbindungseinrichtung zu ermöglichen, ragt von der Querschulterfläche ein Führungssteg für eine Nut des Spannklotzes auf; diese ist vorteilhafterweise querschnittlich hinterschnitten ausgebildet und der Führungssteg ist von entsprechendem Querschnitt. Jedoch kann der Spannklotz auch durch eine -- gegebenenfalls geneigt vorgesehene -- Schraube mit dem Grundkörper verbunden sein sowie parallel zu den längsseitlichen Schulterflächen an seiner Unterfläche geneigte Eckbereiche aufweisen.

Die beiden in Längsrichtung des Werkstückes oder Profilstabes beweglichen Spannklötze greifen in die Längsnut dieses Profilstabes ein und bewirken hiermit eine Verdrehsicherung. Das Element wird in die Längsnut des Profilstabes geschoben und an der gewünschten Position durch Anziehen der Schrauben in den Spannklötzen festgelegt. Die beschriebene Verbindung ist jederzeit lösbar und kann in Längsrichtung des zweiten Profilstabes bewegt werden. Beide Profilstäbe bleiben dabei ohne Beschädigung; bei dieser Verbindung entfällt jegliche mechanische Bearbeitung. Die Schraube im Spannklotz verhindert durch Eingreifen in den Führungssteg des Grundkörpers ein Herausfallen. Bei festem Anziehen der Schrauben aber entsteht eine Verspannung in der hinterschnittenen Nut. Vorteilhaft ist eine Schrägstellung der Schrauben in den Spannklötzen, damit die Druckpunkte möglichst nahe beieinander liegen.

Bei einer anderen Verbindungseinrichtung ist an deren Grundkörper erfindungsgemäß einends ein hammerkopfartiges Einschubelement mittels eines in die Mittelachse des Grundkörpers liegenden Halses angeformt; dabei soll der Abstand der Flankenflächen des Hammerkopfes von der Mittelachse größer sein als deren Abstand von den Seitenkanten des Grundkörpers. Der Hammerkopf wird in die hinterschnittene Längsnut jenes Werkstückes eingeschoben, das dem den Grundkörper aufnehmenden Werkstück oder Profil zugeordnet ist.

Als günstig hat es sich erwiesen, dass hier der Grundkörper von einem Schraubstift durchsetzt wird, der in einem Winkel zur Oberfläche des Grundkörpers geneigt sein kann. Dieser Schraubstift soll unterhalb bzw. außerhalb der Unterflächen des Grundkörpers in eine -- ebenfalls geneigte -- Kerbe im Nutentiefsten der den Grundkörper aufnehmenden Längsnut eingesetzt werden; diese Kerbe ist zuvor problemlos mit einem Hilfwerkzeug einzubringen, und ihre Position ist -- je nach Gegebenheit -- bei der Montage frei wählbar.

Der Schraubstift, bevorzugt eine Madenschraube, wird erst nach dem Einschwenken dieser Verbindungseinrichtung eingedreht und steht dann zwischen den -- wie gesagt -- der Längsnutinnenseite anliegenden Schulterflächen. Beim Anziehen des Schraubstiftes wird die Verbindungseinrichtung nach oben und gleichzeitig mit ihrem gestuften Querschnitt in die Längsnut des Profiles gedrückt. Bei diesem Vorgang zieht anderseits der Hammerkopf das zweite Profil an die Stirnfläche des ersten Profiles. Voraussetzung dafür ist das erwähnte Einbringen der Kerbe in einem genauen Abstand zur Stirnfläche am Nutentiefsten des ersten Profiles.

Im Rahmen der Erfindung liegt eine weitere Ausgestaltung in Form eines platten- oder streifenartigen Grundkörpers, der nahe seinen Stirnflächen von jeweils zumindest einem Schraubstift durchsetzt ist; diese sind bevorzugt gegeneinander geneigt, wobei ihre -- in Kerben am Nutentiefsten eingreifenden Spitzen einander näher liegen als ihre über dem Grundkörper liegenden Betätigungsenden. Dank dieser Maßgabe wird auf zwei Werkstücke oder Profile mit fluchtenden -- gemeinsam den Grundkörper aufnehmenden -- Längsnuten Zug ausgeübt, d. h. ihre Stirnflächen werden aufeinander gedrückt.

Wie bereits dargestellt, wird dieser Grundkörper stirnseitig in die Längsnut des ersten Profiles eingesteckt und mit dem einen Schraubstift leicht festgelegt. Dann wird das zweite Profil fluchtend stirnseitig unter Führung durch den Grundkörper auf das erste Profil gesteckt. Die Schraubstifte werden nun fest angezogen, wobei die Grundplatte nach oben in die Nut der beiden Profile gedrückt wird und gleichzeitig beide Profile gegeneinander spannt.

Auch hier erfolgt das Einbringen der Kerben mit einem einfachen Hilfswerkzeug; in diesen Kerben finden die Schraubstifte sicheren Halt.

Als besondere Vorteile des erfindungsgemäßen Verbindungssystems seien herausgestellt:
- keine mechanische Bearbeitung erforderlich;
- schnelle und einfache Montage;
- kraftschlüssige und verdrehgesicherte Verbindung;
- Potentialausgleich durch Kerbkanten;
- keine äußere Verletzung des Profils;
- nachträglicher Einbau möglich.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: den Querschnitt durch ein stranggepreßtes Hohlprofil mit in diesem angeordneten Befestigungsmitteln;
- Fig. 2:: eine teilweise geschnittene Draufsicht auf Fig. 1;
- Fig. 3:: eine Stirnansicht eines Teiles eines -- einen Spannverbinder enthaltenden -- Hohlprofils und eine Seitenansicht eines jenem rechtwinkelig zugeordneten zweiten Hohlprofils;
- Fig. 4:: den gegenüber Fig. 3 vergrößerten Spannverbinder mit Grundkörper und Kammleiste in Stirnansicht;
- Fig. 5:: die Draufsicht auf den Grundkörper des Spannverbinders mit zwei Spannklötzen, von denen einer vom Grundkörper abgezogen ist;
- Fig. 6:: eine Seitenansicht des Spannverbinders mit aufgesetztem Spannklotz;
- Fig. 7:: eine Stirnansicht des Spannklotzes;
- Fig. 8, 9:: eine andere Ausgestaltung des Spannverbinders in Seiten- und Stirnansicht;
- Fig. 10:: die Draufsicht auf Fig. 8;
- Fig. 11, 12:: einen Teil des Spannverbinders nach Fig. 8 bis 10 in Seiten- und Stirnansicht;
- Fig. 13:: die Draufsicht auf Fig. 11;
- Fig. 14, 15:: zwei unterschiedliche Schraubstifte für den Spannverbinder;
- Fig. 16:: eine Stirnansicht zu Fig. 15;
- Fig. 17:: eine Seitenansicht eines anderen Spannverbinders in zwei teilweise und geschnitten wiedergegebenen Hohlprofilen;
- Fig. 18:: eine Draufsicht auf den Spannverbinder der Fig. 17;
- Fig. 19, 20:: Querschnitte durch Fig. 18 nach deren Linien XIX-XIX und XX-XX;
- Fig. 21:: eine Schrägsicht auf den Spannverbinder der Fig. 17, 18;
- Fig. 22:: eine teilweise geschnittene Seitenansicht zweier axial verbundener Hohlprofile mit sie verbindendem Spannelement;
- Fig. 23:: einen Schnitt durch Fig. 22 nach deren Linie XXIII - XXIII.

Ein stranggepresstes Hohlprofil 10 mit durch einen -- ein Innengewinde 11 anbietenden -- zentrischen Kanal 12 runden Querschnitts eines Innendurchmessers d₁ gelegten Querschnittsachsen A,B als Symmetrieachsen weist jeweils in der Mitte seiner Profilseitenwände 14 eine Längsnut 16 auf mit einem querschnittlich hinterschnittenen Nutenbereich 17.

Der in der Oberfläche jeder der Profilseitenwände 14 vorhandene Nutenschlitz 18 der Längsnut 16 besitzt eine Breite a von beispielsweise 8 mm und wird an der Oberfläche 15 der Profilseitenwand 14 von seitlichen, in dieser Profilseitenwand 14 als Teile von ihr verlaufenden Formrippen 20 einer Dicke b von beispielsweise 4 mm begrenzt.

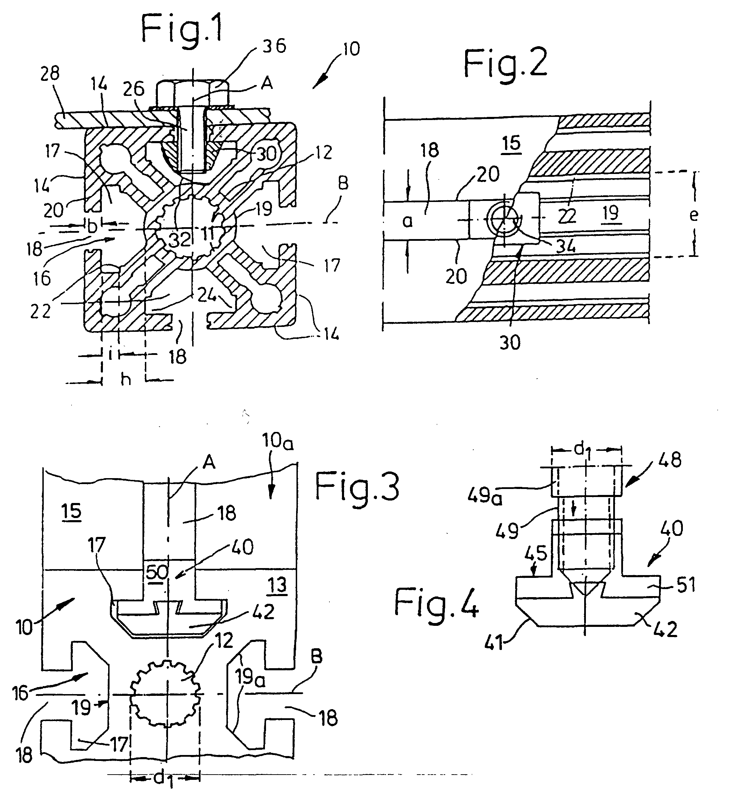

Der hinterschnittene Nutenbereich 17 ist eine von den Formrippen 20 übergriffene rinnenartige Ausnehmung etwa dreiecksförmigen Querschnittes einer Tiefe h von z.B. 10 mm sowie einer maximalen Breite e von hier 22 mm und bietet in Fig. 1 an der Innenseite der Formrippen 20 eine durch Wandstufen 22 zum Nutentiefsten 19 hin begrenzte Einschubbahn 24 der Höhe i an. Das Nutentiefste 19 wird von der Außenfläche des zentrischen Rohrabschnittes 12 des Hohlprofils 10 angeboten.

In den hinterschnittenen Nutenbereich 17 ist in Fig. 1 beispielhaft eine Befestigungseinheit 26 für eine Platte 28 aus einem aus einer Stahllegierung geformten Nutenstein 30 sowie einer Federzunge 32 eingesetzt. Die Federzunge 32 ist einends an einer Flankenfläche des Nutensteins 30 festgelegt, und ihre freie Kante liegt dem Nutentiefsten 19 auf. Der Nutenstein 30 wird von einer ein zentrisches Gewindeloch 34 durchgreifenden Schraube 36 gehalten.

Fig. 3 zeigt in skizzenhaft vereinfachter Darstellung die Stirnfläche 13 eines Hohlprofils 10, an dem mittels eines aus einem Stahlwerkstoff gefertigten Spannverbinders 40 ein zweites Hohlprofil 10ₐ rechtwinkelig festgelegt ist; dieser Spannverbinder 40 ist mit einem stabartigen, entsprechend dem Querschnitt der Längsnut 16 profilierten Grundkörper 42 in eine der hinterschnittenen Längsnuten 16 eingeschoben; an dem den hinterschnittenen Nutenbereich 17 mit beidseitigen Neigungsflächen 19ₐ querschnittlich durch geneigte Eckbereiche 41 angepassten Grundkörper 42 -- der beispielsweisen Breite b von 18 mm sowie einer Länge n von 40 mm -ist eine schmale Kammleiste 43 der Breite e₁ von etwa 10 mm längsmittig angeformt, die beidends in einem Abstand f von der Stirnfläche des Grundkörpers 42 endet. In diesen Abstandsbereichen sowie beidseits der Kammleiste 43 sind Schulterflächen 44 bzw. 45 vorgesehen, wobei die seitlichen Schulterflächen 45 um ein Maß k oberhalb der -- also abgestuften -- endwärtigen Querschulterflächen 44 liegen.

Die Kammleiste 43 wird von einer zentrischen Gewindebohrung 46 durchsetzt für einen Schraubstift 48 mit zwei Gewindebereichen 49, 49ₐ unterschiedlicher Durchmesser d, d₁. Der größere Durchmesser d₁ entspricht dem Innendurchmesser d₁ des zentrischen Rohrabschnittes 12 der Hohlprofile 10, 10ₐ und ist im Rohrabschnitt 12 des Hohlprofils 10ₐ verschraubt.

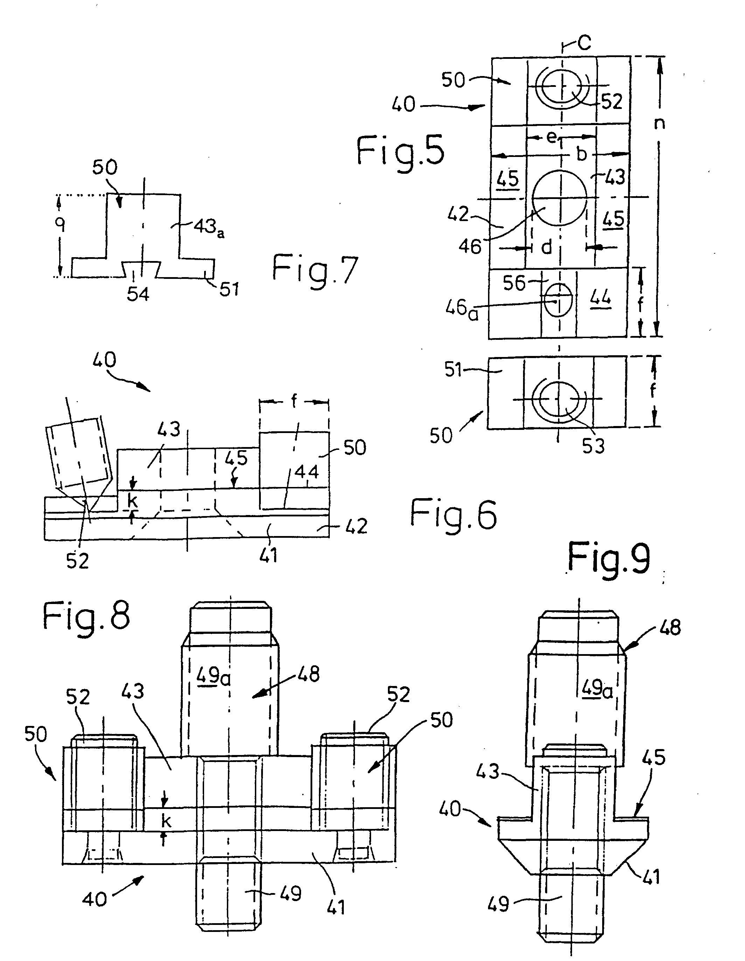

Auf jeder der Schulterflächen 44 ist ein Spannklotz 50 der Länge f -- aus Kammleiste 43ₐ und beidseits flügelartig abkragender Grundplatte 51 -- aufgesetzt und mit einer in eine Gewindebohrung 46a der Schulterfläche 44 eingreifenden Madenschraube 52 festgelegt; die Gewindebohrung des Spannklotzes 50 ist mit 53 bezeichnet. Der Querschnitt des Spannklotzes 50 ist so gestaltet, dass er -- wie vor allem Fig. 6 zeigt -- den Grundkörper 42 und die Kammleiste 43 ergänzt, wobei er letztere mit seiner Höhe q von hier 10 mm etwas überragt.

In die Unterfläche der Grundplatte 51 ist eine geringfügig hinterschnittene Nut 54 längsmittig eingebracht, um den Spannklotz 50 auf einen aus der Schulterfläche 44 herausgeformten Führungssteg 56 aufschieben zu können. Dieser Spannklotz 50 ist in Längsachse C der Grundplatte 51 verschiebbar.

Die zwei in Längsrichtung des Hohlprofils 10 beweglichen Spannklötze 50 greifen also in den Nutenschlitz 18 der Längsnut 16 des Hohlprofils oder Profilstabes 10 ein und bewirken eine Verdrehsicherung. Das Element bzw. der Spannverbinder 40 wird nun in die Längsnut 16 des Hohlprofils oder Profilstabes 10ₐ geschoben und an der gewünschten Position durch Anziehen der beiden Schrauben 52 in den Spannklötzen 50 festgelegt.

Die Verbindung ist jederzeit lösbar und kann in Längsrichtung des Profilstabes 10ₐ bewegt werden. Beide Hohlprofile oder Profilstäbe 10, 10ₐ bleiben ohne Beschädigung, da bei dieser Verbindung eine mechanische Bearbeitung entfällt. Die Schraube 52 im Spannklotz 50 verhindert durch Eingreifen in den Führungssteg 56 des Grundkörpers 42 ein Herausfallen. Beim festen Anziehen der Schrauben 52 aber entsteht eine Verspannung im hinterschnittenen Nutbereich 17. Vorteilhaft ist eine Schrägstellung der Schraube 52 in den Spannklötzen 50, damit die Druckpunkte möglichst nahe beieinander liegen. Ebenfalls ist die Schrägstellung für die Montage günstig.

Die Endbereiche der Schrauben 48, 52 können unterschiedlich ausgebildet sein (spitz, flach, zylindrisch od.dgl.).

Nicht dargestellt ist, dass der Spannverbinder 40 auch mit nur einer Schulterfläche 44 -- und also mit nur einem einends angebrachten Spannklotz 50 -- versehen sein kann.

Beim Spannverbinder 40 der Fig. 8 bis 10 fehlt die beschriebene Paarung 54/56. Die Länge n des Spannverbinders 40 misst hier etwa 40 mm, die Breite b etwa 18 mm, die Breite b₁ der Kammleiste 43ₐ hier 10 mm sowie deren Länge n₁ beispielsweise 20 mm. Der Abstand n₃ der Gewindebohrungen 53 voneinander beträgt dann 30 mm bei einem Durchmesser d₂ von 4 mm.

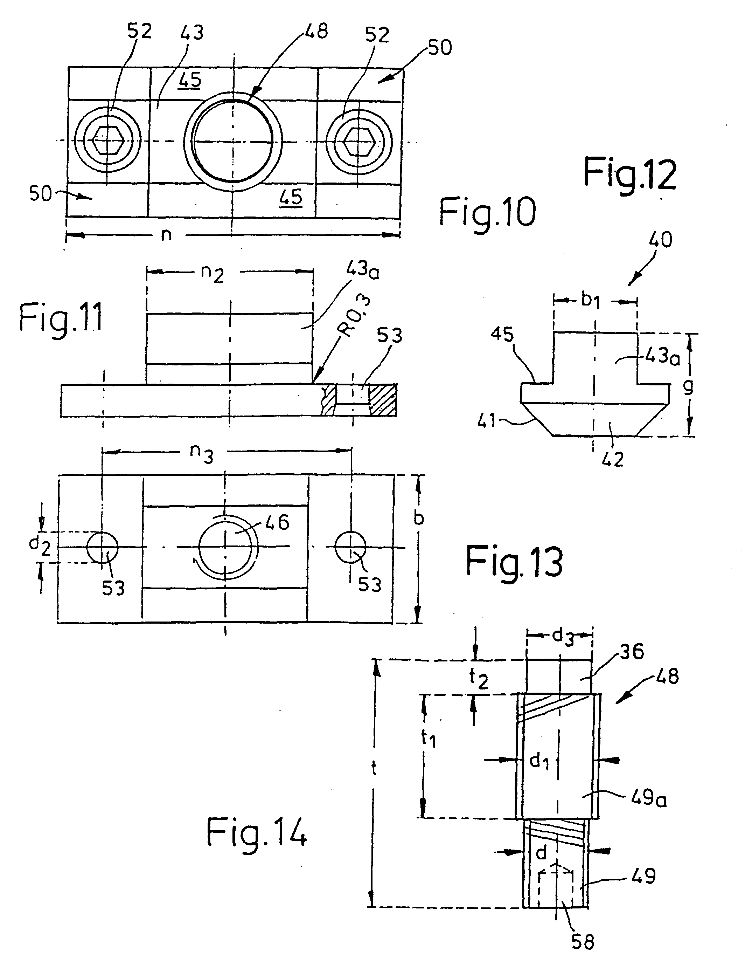

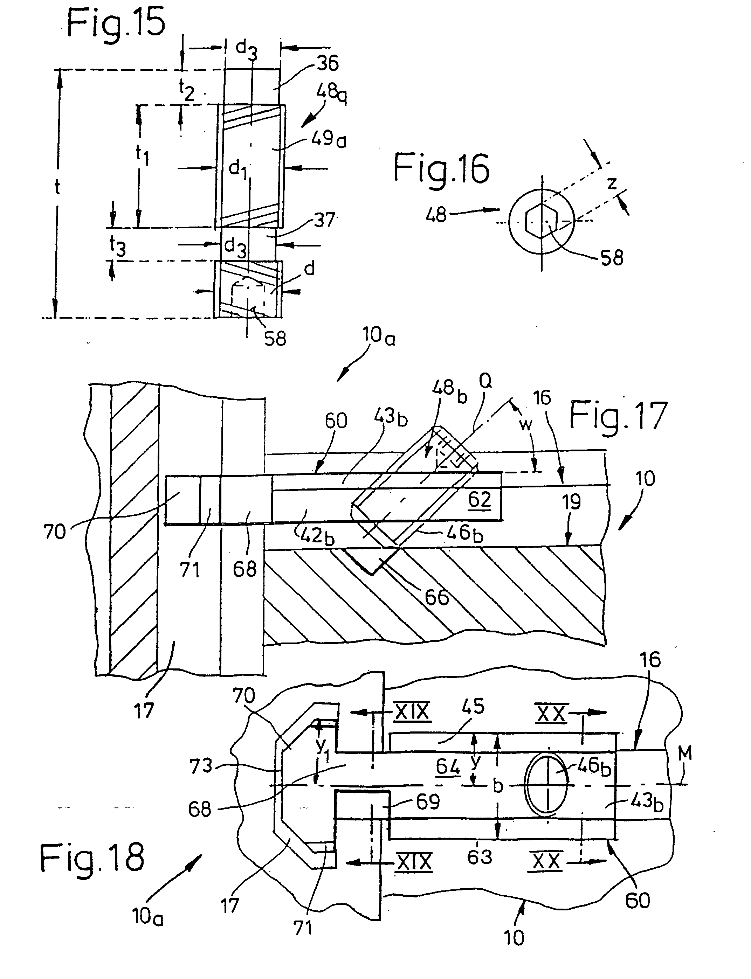

Der Schraubstift 48 der Länge t von hier 30 mm in Fig. 14 ist in seinen beiden Gewindebereichen 49, 49ₐ -- der Durchmesser d = M8 und d₁ = M10 -- mit zueinander gegenläufigen Gewinden ausgestattet; das in Fig. 14, 15 obere Gewinde ist selbstformend. Zudem ist in der Stirn des Gewindebereiches 49 eine Innensechskantausnehmung 58 der Weite Z = SW4 vorgesehen. Die axiale Länge tl des dickeren Gewindebereiches 49ₐ misst hier 15 mm, die Länge t₂ eines Zylinderaufsatzes 36 hier 4 mm bei einem Durchmesser d₃ von 8 mm.

Bei der Ausführung des Schraubstiftes 48_{q} nach Fig. 15, 16 ist zwischen den Gewindebereichen 49, 49ₐ gleichen Durchmessers d, d₁ ein Zwischenstück 37 des Durchmessers d, von 6,5 mm vorhanden. Die Länge t₃ dieses Zwischenstücks 37 misst 4 mm.

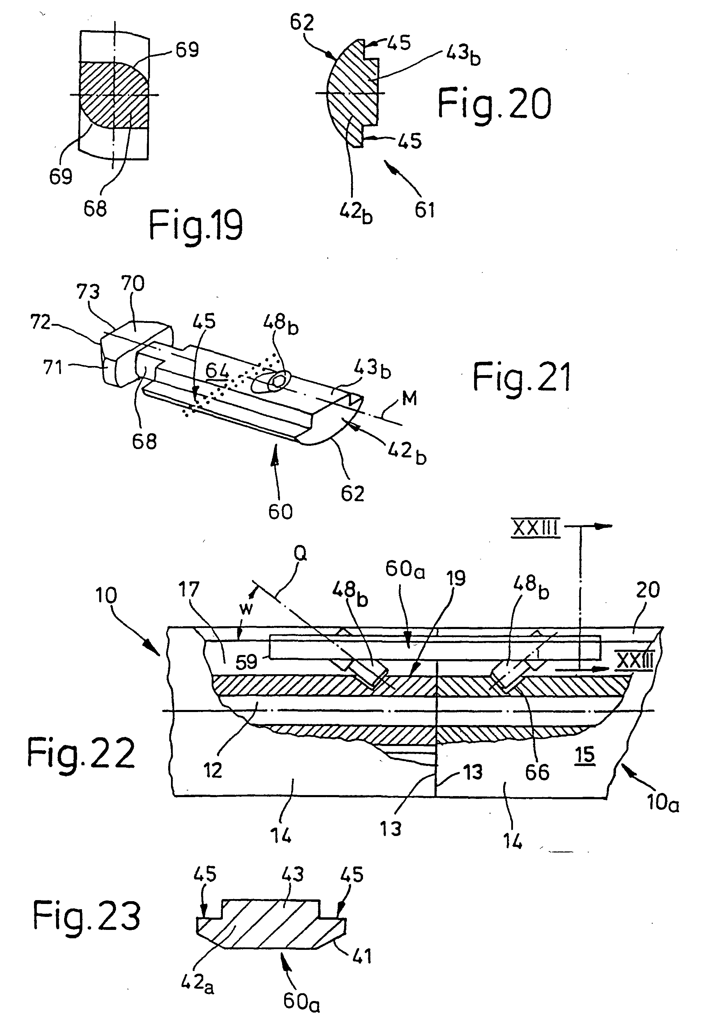

Die beiden Hohlprofile 10, 10ₐ der Fig. 17 werden von einem Spannverbinder 60 zusammengehalten, der von außen in die Längsnuten 16 eingeschwenkt werden kann. Er besteht aus einem profilierten Werkstoffstreifen 61, der sich gemäß Fig. 20 aus einem Grundkörper 42_{b} der Breite b mit querschnittlich teilkreisförmig gekrümmter Unterfläche 62 und einer angeformten Kammleiste 43_{b} zusammensetzt, die beidseits von Schulterflächen 45 begleitet ist, d. h. im Querschnitt eine Stufung anbietet.

Dieser Grundkörper 42_{b} ist von einem Schraubloch 46_{b} durchsetzt, dessen Achse Q in einem Winkel w von etwa 45° zur Kammleistenoberfläche 64 geneigt ist; ein eingesetzter Schraubstift 48_{b} weist mit seinem freien Ende zum benachbarten Hohlprofil 10ₐ hin und kann in eine zuvor in das Nutentiefste 19 mittels eines Hilfswerkzeuges eingeprägte Kerbe 66 eingesetzt werden. Diese/r geneigt verlaufende Stiftschraube oder Schraubstift 48 wird erst nach dem Einschwenken des Spannverbinders 60 eingedreht.

Der Spannverbinder 60 kann in eine bestehende Konstruktion nachträglich eingebaut werden. Das Hohlprofil 10 wird auf die genaue Länge gesägt, beidseitig eingekerbt und zwischen die beiden anderen Hohlprofile gebracht. Nun wird der Spannverbinder 60 ohne Stiftschraube 48_{b} in beide Profile eingeschwenkt. Die Stiftschraube 48_{b} wird eingedreht und das Profil kraftschlüssig angebunden. Wenn zwei derartige Spannverbinder 60 an einer Stirnseite festliegen, ist eine Verdrehsicherung gegeben.

An den Grundkörper 42_{b} schließt mittels eines Halses 68 ein flacher Hammerkopf 70 als Einschubelement mit querschnittlich teilkreisförmig gekrümmten achsparallelen Flankenflächen 71 an, die in -- zur Mittelachse M des Spannverbinders 60 geneigte -- Seitenflächen 72 übergehen; diese enden an einer die Mittelachse M querenden Frontfläche 73. Der Abstand y der Flankenfläche 71 von jener Mittelachse M ist größer als deren Abstand y von den Seitenkanten 63 des Grundkörpers 42_{b}.

Der Hals 68 ist in Fig. 21 symmetrisch zur Mittelachse M, in Fig. 17, 18, 19 aber an querschnittlich diagonalen Eckbereichen 69 gekrümmt.

Beim Anziehen des Schraubstiftes 48 wird der Schraubverbinder 60 nach oben und gleichzeitig mit der erwähnten querschnittlichen Stufung an den seitlichen Schulterflächen 45 in die Längsnut 16 des ersten Hohlprofils 10 gedrückt.

Wird der Schraubstift 48_{b} nun fest angezogen, zieht der Hammerkopf 70 das zweite Hohlprofil 10ₐ an die Stirnfläche 13 des ersten Hohlprofils 10. Von wesentlicher Bedeutung für diesen Ablauf ist die erwähnte -- in Achsrichtung Q geneigt verlaufende -- Kerbe 66, die in einem genauen Abstand zur Stirnfläche 13 in das Nutentiefste 19 des ersten Hohlprofils 10 eingeformt wird. Dies geschieht mit einem einfachen Hilfswerkzeug, und der Schraubstift 48_{b} hat einen sicheren Halt. Im übrigen ist die 90°-Kerbe 66 in der gleichen Neigung wie der Schraubstift 48 angeordnet und bildet für diesen eine Auflage. Bei dieser Verbindungsart ist eine mechanische Bearbeitung nicht erforderlich.

Der Spannverbinder 60ₐ der Fig. 22, 23 mit zwei in Abstand vorgesehenen Schraubstiften 48_{b} soll zwei axiale Hohlprofile 10, 10ₐ zusammenhalten. Er weist einen Grundkörper 42ₐ auf, dessen Querschnitt etwa jenem des unteren Bereiches der Fig. 4 entspricht mit beidseits einer Kammleiste 43 verlaufenden Schulterflächen 45 sowie unterhalb dieser vorgesehenen geneigten Eckbereichen 41. Dieser Spannverbinder 60ₐ wird stirnseitig in die Längsnut 16 des ersten Hohlprofils 10 eingesteckt und mit dem einen der nahe den Stirnflächen 59 vorgesehenen Schraubstifte 48_{b} leicht festgelegt, nachdem er etwa hälftig beide Hohlprofile 10, 10ₐ übergreift.

Dann wird das zweite Hohlprofil 10ₐ mit seiner Stirnfläche 13 -- geführt von dem Spannverbinder 60ₐ -- auf das erste Hohlprofil 10 aufgesteckt. Nun werden die Schraubstifte oder Halteschrauben 48_{b} fest angezogen, wobei der Spannverbinder 60ₐ nach oben in die Längsnut 16 der Hohlprofile 10, 10ₐ gedrückt wird, und dabei beide gegeneinander spannt.

Auch hier wird vorher eine Kerbe 66 in einem genauen Abstand zur Stirnfläche 16 in die Nutentiefsten 19 beider Hohlprofile 10, 10ₐ eingeformt; in diesen Kerben 66 finden die Schraubstifte 48_{b} sicheren Halt.

Naheliegenderweise können mehrere dieser Spannverbinder 60ₐ in mehreren Nuten des Hohlprofils 10 von dessen Stirnseiten 13 eingebracht werden.

## Patentansprüche

1. Verbindungseinrichtung zum Anschluss eines mit wenigstens einer hinterschnittenen Längsnut ausgestatteten ersten Werkstückes an ein zweites seinerseits mit Längsnut/en versehenes Werkstück, wobei die Verbindungseinrichtung zumindest eine die Breite des engen Nutenquerschnitts der Längsnut/en übersteigende Erstreckung aufweist, insbesondere Verbindungseinrichtung für Profilstäbe polygonen Querschnitts mit in den Profilseitenwänden verlaufenden Längsnuten,
**dadurch gekennzeichnet,**
**dass** die Verbindungseinrichtung (40, 60, 60ₐ) wenigstens einen teilweise in den engen Nutenquerschnitt (17) der Längsnut (16) einsetzbaren Grundkörper (42, 42ₐ, 42_{b}) mit beidseits einer Kammleiste (43, 43_{b}) od. dgl. Mittenstück verlaufenden längsseitlichen Schulterflächen (45) aufweist, der im Bereich der Kammleiste von wenigstens einem an das Werkstück bzw. den Profilstab(10, 10ₐ) anschließbar ausgebildeten stiftartigen Anschlussorgan (48, 48_{b}, 48q) durchsetzt ist, wobei die Verbindungseinrichtung außerhalb des Grundkörpers mit einem Anschlusselement (48, 48_{b}, 48q; 70) für das andere Werkstück (10ₐ, 10) versehen ist.

2. Verbindungseinrichtung nach Anspruch 1, **dadurch gekennzeichnet, dass** der Grundkörper (42) an wenigstens einem der Enden seiner Kammleiste (43) eine die längsseitlichen Schulterflächen (45) quer verbindende Schulterfläche (44) aufweist als Aufsitzfläche für einen auf ihr festlegbaren Spannklotz (50), dessen Breite bevorzugt der Breite (e₁) der Kammleiste entspricht.

3. Verbindungseinrichtung nach Anspruch 1 oder 2, **dadurch gekennzeichnet, dass** die Breite (e₁) der Kammleiste (43, 43_{b}) des Grundkörpers (42, 42ₐ, 42_{b}) der Breite (a) des Nutenschlitzes (18) der Längsnut (16) entspricht.

4. Verbindungseinrichtung für ein Werkstück mit einem bevorzugt zentrischen bohrungsartigen Kanal (12) nach einem der Ansprüche 1 bis 3, **dadurch gekennzeichnet, dass** das von der Kammleiste (43) des Grundkörpers (42) aufragende stiftartige Anschlussorgan (48, 48_{q}) in den Kanal (12) eines rechtwinkelig anzuschließenden anderen Werkstückes (10ₐ) einführbar und darin festlegbar ausgebildet ist.

5. Verbindungseinrichtung nach einem der Ansprüche 1 bis 4, **dadurch gekennzeichnet, dass** das Anschlussorgan (48, 48_{q}) ein Schraubstift mit zwei Gewindebereichen (49, 49ₐ) ist, die mit gegenläufigen Gewinden versehen und/oder von unterschiedlichen Durchmessern (d, d₁) sind, wobei der Gewindebereich (49) geringeren Durchmessers (d) bevorzugt dem Grundkörper (42) zugeordnet ist, wobei gegebenenfalls zumindest der außerhalb des Grundkörpers (42) abragende Gewindebereich (49ₐ) mit einem selbstschneidenden Gewinde versehen ist.

6. Verbindungseinrichtung nach einem der Ansprüche 1 bis 5, **dadurch gekennzeichnet, dass** die längsseitigen Schulterflächen (45) gegenüber der/den Querschulterfläche/n (44) des Grundkörpers (42) um ein Maß (k) höhenversetzt verlaufen.

7. Verbindungseinrichtung nach einem der Ansprüche 1 bis 7, **dadurch gekennzeichnet, dass** von der Querschulterfläche (44) ein Führungssteg (56) für eine Nut (54) des Spannklotzes (50) aufragt, wobei gegebenenfalls die Nut (54) querschnittlich hinterschnitten ausgebildet und der Führungssteg (56) von entsprechendem Querschnitt ist, und/oder dass der Spannklotz (50) auf dem Grundkörper (42) in dessen Längsachse (C) verschieblich lagert, und/oder dass der Spannklotz (50) durch eine Schraube (52) mit dem Grundkörper (42) verbunden ist.

8. Verbindungseinrichtung nach Anspruch 1 oder 3, **dadurch gekennzeichnet, dass** an den Grundkörper (42_{b}) der Verbindungseinrichtung 69) einends ein hammerkopfartiges Einschubelement (70) mittels eines in der Mittelachse (M) des Grundkörpers liegenden Halses (68) angeformt ist.

9. Verbindungseinrichtung nach Anspruch 7 oder 8, **dadurch gekennzeichnet, dass** der Abstand (yl) der Flankenflächen (71) des Hammerkopfes (70) von der Mittelachse (M) größer ist als deren Abstand (y) von den Seitenkanten (63) des Grundkörpers (42_{b})

10. Verbindungseinrichtung nach Anspruch 8 oder 9, **dadurch gekennzeichnet, dass** der Grundkörper (42_{b}) von einem Schraubstift (48_{b}) durchsetzt ist.

11. Verbindungseinrichtung nach Anspruch 1 oder 3, **dadurch gekennzeichnet, dass** sie aus einem streifenoder plattenförmigen Grundkörper (42ₐ) besteht, der nahe deren Stirnflächen (59) von jeweils zumindest einem Schraubstift (48_{b}) durchsetzt ist.

12. Verbindungseinrichtung nach Anspruch 7, 10 oder 11, **dadurch gekennzeichnet, dass** die Schraube (52) bzw. der Schraubstift (48b) in Spannstellung geneigt verläuft, gegebenenfalls in einem Winkel (w) von etwa 45° zur Oberfläche des Grundkörpers (42, 42ₐ, 42_{b}).

13. Verbindungseinrichtung nach einem der Ansprüche 10 bis 12, **dadurch gekennzeichnet, dass** der Schraubstift (48_{b}) des Grundkörpers (42ₐ, 42_{b}) außerhalb von dessen Unterfläche (82) in eine Kerbe (66) im Nutentiefsten (19) der den Grundkörper aufnehmenden Längsnut/en (16) einsetzbar ist.

14. Verbindungseinrichtung nach einem der Ansprüche 11 bis 13, **dadurch gekennzeichnet, dass** die beiden im Grundkörper (42ₐ) in Abstand verlaufenden Schraubstifte (48_{b}) gegeneinander so geneigt sind, dass ihre freien Enden zueinander weisen.

15. Verbindungseinrichtung nach Anspruch 11 oder 14, **dadurch gekennzeichnet, dass** sie zwei einander koaxial zugeordnete Werkstücke oder Profile (10, 10ₐ) verbindet, deren Längsnuten (16) miteinander fluchten, wobei gegebenenfalls die Stirnflächen (13) der beiden Werkstücke oder Profile (10, 10ₐ) durch die zueinander geneigte Stellung der Schmalstifte (48_{b}) aneinandergedrückt sind.

## Claims

1. Connecting device for the connection of a first work piece having at least one undercut longitudinal groove to a second work piece which is in turn provided with longitudinal groove(s), wherein the connecting device has at least one dimension exceeding the width of the narrow groove cross-section of the longitudinal groove (s), in particular connecting device for profiled rods of polygonal cross-section with longitudinal grooves running in the profile side walls, **characterised in that** the connecting device (40, 60, 60ₐ) comprises at least one main body (42, 42ₐ, 42_{b}) which can be partially inserted in the narrow groove cross-section (17) of the longitudinal groove (16) and which has longitudinal-side shoulder surfaces (45) running on both sides of a comb strip (43, 43_{b}) or the like centre piece, and through which extends in the region of the comb strip at least one pin-like connecting member (48, 48_{b}, 48_{q}) designed so that it can be connected to the work piece or to the profiled rod (10, 10ₐ), wherein the connecting device is provided outside the main body with a connecting element (48, 48_{b}, 48_{q}; 70) for the other work piece (10ₐ, 10).

2. Connecting device according to claim 1, **characterised in that** the main body (42) at at least one of the ends of its comb strip (43) comprises a shoulder surface (44) transversely connecting the longitudinal-side shoulder surfaces (45) as a seat surface for a clamping block (50) which can be fixed to it and whose width preferably corresponds to the width (e₁) of the comb strip.

3. Connecting device according to claim 1 or 2, **characterised in that** the width (eᵢ) of the comb strip (43, 43_{b}) of the main body (42, 42ₐ, 42_{b}) corresponds to the width (a) of the groove slot (18) of the longitudinal groove (16).

4. Connecting device for a work piece having a preferably central bore-like channel (12) according to any of claims 1 to 3, **characterised in that** the pin-like connecting member (48, 48_{q}) which extends upwards from the comb strip (43) of the main body (42) is designed so that it can be introduced into the channel (12) of a second work piece (10ₐ) to be connected at right angles, and fixed therein.

5. Connecting device according to any of claims 1 to 4, **characterised in that** the connecting member (48, 48_{q}) is a screw pin with two thread regions (49, 49ₐ) which are provided with threads in opposite directions and/or have different diameters (d, d₁), wherein the thread region (49) of smaller diameter (d) is preferably associated with the main body (42), wherein if occasion arises at least the thread region (49ₐ) protruding outside the main body (42) is provided with a self-tapping thread.

6. Connecting device according to any of claims 1 to 5, **characterised in that** the longitudinal-side shoulder surfaces (45) are offset in height from the transverse shoulder surface(s) (44) of the main body (42) by an amount (k) .

7. Connecting device according to any of claims 1 to 7, **characterised in that** a guide web (56) for a groove (54) of the clamping block (50) extends upwards from the transverse shoulder surface (44), wherein if occasion arises the groove (54) is cross-sectionally undercut and the guide web (56) is of corresponding cross-section, and/or **in that** the clamping block (50) is mounted on the main body (42) so as to be slidable in its longitudinal axis (C), and/or **in that** the clamping block (50) is connected by a screw (52) to the main body (42).

8. Connecting device according to claim 1 or 3, **characterised in that** a hammerhead-like insertion element (70) is integrally formed on the main body (42_{b}) of the connecting device (69) at one end by means of a neck (68) lying in the centre axis (M) of the main body.

9. Connecting device according to claim 7 or 8, **characterised in that** the distance (y1) of the flank surfaces (71) of the hammerhead (70) from the centre axis (M) is greater than the distance (y) thereof from the side edges (63) of the main body (42_{b}).

10. Connecting device according to claim 8 or 9, **characterised in that** a screw pin (48_{b}) extends through the main body (42_{b}).

11. Connecting device according to claim 1 or 3, **characterised in that** it consists of a strip- or plate-like main body (42ₐ) through which extends, near its end faces (59), in each case at least one screw pin (48_{b}).

12. Connecting device according to claim 7, 10 or 11, **characterised in that** the screw (52) or the screw pin (48b) is inclined in the clamping position, if occasion arises at an angle (w) of approximately 45° to the upper surface of the main body (42, 42ₐ, 42_{b}).

13. Connecting device according to any of claims 10 to 12, **characterised in that** the screw pin (48_{b}) of the main body (42ₐ, 42_{b}) outside the lower surface (82) thereof can be inserted in a notch (66) in the groove bottom (19) of the longitudinal groove(s) (16) which receive the main body.

14. Connecting device according to any of claims 11 to 13, **characterised in that** the two screw pins (48_{b}) running at a distance in the main body (42ₐ) are inclined in opposite directions to each other such that their free ends point towards each other.

15. Connecting device according to claim 11 or 14, **characterised in that** it connects two work pieces or profiles (10, 10ₐ) which are associated with each other coaxially and whose longitudinal grooves (16) are aligned with each other, wherein if occasion arises the end faces (13) of the two work pieces or profiles (10, 10ₐ) are pressed against each other by the position of the narrow pins (48_{b}) inclined to each other.

## Revendications

1. Dispositif d'assemblage permettant de raccorder une première pièce, dotée d'au moins une rainure longitudinale contre-dépouillée, à une seconde pièce elle-même pourvue d'une ou plusieurs rainures longitudinales, le dispositif d'assemblage présentant une étendue dépassant au moins la largeur de la section étroite de la ou des rainures longitudinales, en particulier dispositif d'assemblage pour des barres profilées de section polygonale, dotées de rainures longitudinales s'étendant dans les parois latérales des profilés,
**caractérisé en ce que** le dispositif d'assemblage (40, 60, 60ₐ) présente au moins un corps de base (42, 42ₐ, 42_{b}), pouvant être inséré partiellement dans la section étroite (17) de la rainure longitudinale (16), doté de surfaces d'épaulement (45) s'étendant sur ses côtés longitudinaux de part et d'autre d'une barrette de crête (43, 43_{b}) ou partie centrale analogue, et traversé dans la région de la barrette de crête par au moins un organe de raccordement du genre broche (48, 48_{b}, 48_{q}) conçu pour pouvoir être raccordé à la pièce ou barre profilée (10, 10ₐ), le dispositif d'assemblage étant doté, en dehors du corps de base, d'un élément de raccordement (48, 48_{b}, 48_{q} ; 70) pour l'autre pièce (10ₐ, 10).

2. Dispositif d'assemblage selon la revendication 1, **caractérisé en ce que** le corps de base (42) présente, à au moins une des extrémités de sa barrette de crête (43), une surface d'épaulement (44) reliant transversalement les surfaces d'épaulement (45) situées sur les côtés longitudinaux et prévue comme surface d'appui pour une cale de serrage (50) pouvant être immobilisée sur elle, cale dont la largeur correspond de préférence à la largeur (e₁) de la barrette de crête.

3. Dispositif d'assemblage selon la revendication 1 ou 2, **caractérisé en ce que** la largeur (e₁) de la barrette de crête (43, 43_{b}) du corps de base (42, 42ₐ, 42_{b}) correspond à la largeur (a) de la fente (18) de la rainure longitudinale (16).

4. Dispositif d'assemblage pour une pièce pourvue d'un canal (12) du genre perçage, de préférence central, selon l'une des revendications 1 à 3, **caractérisé en ce que** l'organe de raccordement du genre broche (48, 48_{q}) qui se dresse à partir de la barrette de crête (43) du corps de base (42) est conçu pour pouvoir être introduit et immobilisé dans le canal (12) d'une autre pièce (10ₐ) à raccorder à angle droit.

5. Dispositif d'assemblage selon l'une des revendications 1 à 4, **caractérisé en ce que** l'organe de raccordement (48, 48_{q}) est une broche filetée avec deux régions filetées (49, 49ₐ) qui sont pourvues de filets en sens contraires et/ou sont de diamètres différents (d, d₁), la région filetée (49) de plus petit diamètre (d) étant de préférence associée au corps de base (42), et au moins la région filetée (49ₐ) faisant saillie hors du corps de base (42) étant éventuellement pourvue d'un filetage autotaraudeur.

6. Dispositif d'assemblage selon l'une des revendications 1 à 5, **caractérisé en ce que** les surfaces d'épaulement (45) situées sur les côtés longitudinaux sont décalées en hauteur d'une cote (k) par rapport à la ou aux surfaces d'épaulement transversales (44) du corps de base (42).

7. Dispositif d'assemblage selon l'une des revendications 1 à 6, **caractérisé en ce qu'**une nervure de guidage (56) pour une rainure (54) de la cale de serrage (50) se dresse à partir de la surface d'épaulement transversale (44), la rainure (54) étant éventuellement réalisée contre-dépouillée en coupe transversale et la nervure de guidage (56) étant d'une forme correspondante en coupe transversale, et/ou **en ce que** la cale de serrage (50) est montée à coulissement sur le corps de base (42) le long de son axe longitudinal (C), et/ou **en ce que** la cale de serrage (50) est assemblée par une vis (52) au corps de base (42).

8. Dispositif d'assemblage selon la revendication 1 ou 3, **caractérisé en ce qu'**un élément d'insertion (70) en tête de marteau est formé à une extrémité du corps de base (42_{b}) du dispositif d'assemblage (60), par l'intermédiaire d'un collet (68) situé dans l'axe médian (M) du corps de base.

9. Dispositif d'assemblage selon la revendication 7 ou 8, **caractérisé en ce que** la distance (y1) entre les faces de flancs (71) de la tête de marteau (70) et l'axe médian (M) est supérieure à la distance (y) entre les bords latéraux (63) du corps de base (42_{b}) et l'axe médian (M).

10. Dispositif d'assemblage selon la revendication 8 ou 9, **caractérisé en ce que** le corps de base (42_{b}) est traversé par une broche filetée (48_{b}).

11. Dispositif d'assemblage selon la revendication 1 ou 3, **caractérisé en ce qu'**il est constitué d'un corps de base (42ₐ) en forme de bande ou de plaque, qui est traversé à proximité de ses faces frontales (59) par au moins une broche filetée respective (48_{b}).

12. Dispositif d'assemblage selon la revendication 7, 10 ou 11, **caractérisé en ce que** la vis (52) ou la broche filetée (48_{b}) s'étend en inclinaison en position de serrage, éventuellement sous un angle (w) d'environ 45° par rapport à la face supérieure du corps de base (42, 42ₐ, 42_{b}).

13. Dispositif d'assemblage selon l'une des revendications 10 à 12, **caractérisé en ce que** la broche filetée (48_{b}) du corps de base (42ₐ, 42_{b}) peut être insérée, en dehors de sa face inférieure (82), dans une encoche (66) au plus profond (19) de la ou des rainures longitudinales (16) recevant le corps de base.

14. Dispositif d'assemblage selon l'une des revendications 11 à 13, **caractérisé en ce que** les deux broches filetées (48_{b}) s'étendant à distance dans le corps de base (42ₐ) sont inclinées l'une par rapport à l'autre de telle sorte que leurs extrémités libres sont tournées l'une vers l'autre.

15. Dispositif d'assemblage selon la revendication 11 ou 14, **caractérisé en ce qu'**il relie deux pièces ou profilés (10, 10ₐ) coaxialement associé(e)s, dont les rainures longitudinales (16) sont mutuellement alignées, les faces frontales (13) des deux pièces ou profilés (10, 10ₐ) étant éventuellement pressées l'une contre l'autre par la position inclinées l'une vers l'autre des broches étroites (48_{b}).
